# EUROPÄISCHE PATENTANMELDUNG

(11) **EP 1 385 116 A1**
(43) Veröffentlichungstag der Anmeldung: **28.01.2004**
(21) Anmeldenummer: 02405637.6
(22) Anmeldetag: 22.07.2002
(51) Int. Cl.: G06K 9/00, G07C 9/00

(54) **Verfahren zur Erteilung einer Zugangsberechtigung**

(71) Anmelder: Human Bios GmbH, 8280 Kreuzlingen (CH)
(72) Erfinder: Kisters, Friedrich, 8280 Kreuzlingen (CH)
(74) Vertreter: Roshardt, Werner Alfred, Dipl.-Phys.

(57) **Zusammenfassung**

Bei einem Verfahren zur Erteilung einer Zugangsberechtigung für einen Zugriff auf einen geschützten Speicher (1) wird dem Benutezr (2) der Zugriff nur dann erlaubt, wenn der Benutzer korrekt identifiziert (31, 32, 33) und/oder authentifiziert worden ist. Für die Identifizierung bzw. Authentifizierung des Benutzers (2) werden mit einem Duplex-Sonographie Verfahren Körpermerkmale, d. h. Informationen über das Innere eines bestimmten Körperteils oder einer bestimmten Körperregion des Benutzers, beispielsweise Informationen über das Blutgefässsystem im Daumen des Benutzers erfasst (36) und mit entsprechenden, zuvor beschafften und in einer Datenbank (11) abgespeicherten Informationen verglichen (39). Ist das Resultat des Vergleichs positiv, d. h. stimmen die erfassten Informationen mit den zu diesem Benutzer in der Datenbank (11) gespeicherten Informationen überein, wird dem Benutzer (2) der Zugriff (43) auf den Speicher gewährt. Konnte der Benutzer (2) nicht korrekt authentifiziert werden, wird ihm der Zugriff (43) verweigert.

## Beschreibung

### Technisches Gebiet

Die Erfindung betrifft ein Verfahren zur Erteilung einer Zugangsberechtigung für einen Zugang zu geschützten Bereichen durch einen Benutzer, bei welchem Körpermerkmale des Benutzers erfasst werden. Weiter betrifft die Erfindung eine Vorrichtung zur Erteilung einer Zugangsberechtigung für einen Zugang zu geschützten Bereichen durch einen Benutzer, umfassend erste Mittel zur Erfassung von Körpermerkmalen des Benutzers.

### Stand der Technik

Die Zahl der Systeme, bei welchen der Zugriff auf bestimmte, geschützte Bereiche nur autorisierten Benutzern erlaubt ist, nimmt ständig zu. Bei solchen geschützten Bereichen kann es sich sowohl um physische Gebilde wie geografische Gebiete, Gebäude oder Räumlichkeiten, als auch um nicht-körperliche Bereiche wie etwa geschützte Daten oder Speicherbereiche eines Computersystems handeln. Im ersten Fall soll autorisierten Personen der physische Zugang zu solchen Gebieten, Gebäuden oder Räumlichkeiten gewährt, nicht-autorisierten Personen jedoch verwehrt werden. Bei Computersystemen verhält es sich ähnlich. Auch hier soll auf die in den geschützten Bereichen gespeicherten Informationen nur von autorisierten Personen zugegriffen werden können.

Bei vielen solcher Systeme müssen sich die Benutzer bei jedem Zugriff gegenüber dem System zunächst einmal identifizieren. Dies erfolgt beispielsweise durch Eingabe einer Benutzerkennung oder mittels Einführen einer Chipkarte in ein entsprechendes Lesegerät. Aufgrund der Benutzerkennung oder der auf der Chipkarte gespeicherten Informationen kann dann deren Besitzer identifiziert werden. Ist der Besitzer der Karte nicht als autorisierter Benutzer registriert, wird diesem der Zugang in der Regel nicht erlaubt. Allerdings sind solche Verfahren relativ unsicher, da nicht überprüft wird, ob die Person, welche die Benutzerkennung eingibt bzw. die Karte in den Leser einführt, auch wirklich die für den Zugang autorisierte Person ist. Aus diesem Grund erfolgt nach der Identifizierung des Benutzers typischerweise eine Authentifizierung desselben. Auch zur Authentifizierung sind verschiedene Verfahren bekannt. So wird beispielsweise die Eingabe eines Passwortes verlangt oder es wird überprüft, ob bestimmte biometrische Daten der Person wie etwa Fingerabdrücke mit den in einer Datenbank abgespeicherten Informationen über den tatsächlich autorisierten Benutzer übereinstimmen.

Systeme, die einen Benutzer anhand von biometrischen Daten identifizieren oder authentifizieren wurden bisher als sehr sicher eingestuft. Es hat sich jedoch herausgestellt, dass sich die meisten derartigen Systeme relativ leicht überlisten lassen. So kann man sich beispielsweise ziemlich leicht die Fingerabdrücke eines autorisierten Benutzers beschaffen, indem man sich einen Gegenstand besorgt, welchen dieser angefasst hat. Bei Systemen, bei welchen die Iris gescannt oder eine Gesichtserkennung durchgeführt wird, reichen einige wenige Bilder des autorisierten Benutzers aus, um an die entsprechenden Informationen zu gelangen. Ebenso kann eine Tonbandaufnahme des autorisierten Benutzers verwendet werden, um sich Zugang zu Systemen zu verschaffen, welche den Benutzer anhand einer Stimmanalyse erkennen.

### Darstellung der Erfindung

Aufgabe der Erfindung ist es, ein Verfahren der eingangs genannten Art anzugeben, welches eine sicherere Möglichkeit bietet, nur autorisierten Benutzern den Zugang zu geschützten Bereichen zu gestatten.

Die Lösung der Aufgabe ist durch die Merkmale des Anspruchs 1 definiert. Gemäss der Erfindung werden von einem Benutzer, der Zugang zu einem geschützten Bereich erhalten möchte, innere Körpermerkmale erfasst. Diese werden danach verglichen mit bereits zuvor ermittelten, dem Benutzer zugeordneten und abgespeicherten Körpermerkmalen. In Abhängigkeit des Resultats dieses Vergleichs wird dem Benutzer schliesslich die Zugangsberechtigung zu den geschützten Bereichen erteilt oder aber verweigert.

Bevor also ein Benutzer Zugang zu dem geschützten Bereich erhält, muss er dem System bereits bekannt sein. Mehr noch, bereits vor dem ersten Zugriff müssen dem System die zur Durchführung des Vergleichs benötigten Informationen über den Benutzer bekannt sein. D. h. die inneren Körpermerkmale des Benutzers werden vorgängig ermittelt und zusammen mit den Angaben über die Identität des Benutzers gespeichert. Will nun dieser Benutzer Zugang zu einem geschützten Bereich, werden dieselben Informationen wieder erfasst und danach mit den zuvor gespeicherten Informationen des betreffenden Benutzers verglichen.

Bei den inneren Körpermerkmalen des Benutzers handelt es sich um Informationen, die von aussen mit blossem Auge bzw. ohne technische Hilfsmittel nicht sichtbar sind, beispielsweise um Informationen über Knochen, Organe oder Gefässe in einem bestimmten Körperbereich. Hierbei handelt es sich zwar wie beispielsweise bei Fingerabdrücken auch um biometrische Daten. Im Unterschied zu Fingerabdrücken, die ein Benutzer praktisch überall hinterlässt, wo er etwas anfasst, ist es für einen Aussenstehenden jedoch kaum möglich, unbemerkt an diese Informationen über innere Eigenschaften von Körperteilen bzw. Körperregionen des Benutzers zu gelangen. Damit ist es auch praktisch unmöglich, unbefugt Zugang zu geschützten Bereichen zu erhalten.

Selbst wenn sich ein Unbefugter diese Informationen über die inneren Körpermerkmale des Benutzers beschaffen könnte, wäre es technisch nahezu unmöglich, anhand dieser Informationen das jeweilige Körpermerkmal innert nützlicher Frist so nachzubilden, dass ein entsprechendes Lesegerät die Nachbildung als authentisch akzeptieren würde. Der Unbefugte müsste in der Lage sein, das Innere z. B. eines Fingers exakt nachzubilden, was derzeit nicht möglich ist.

Anhand der erfassten Informationen über das Körpermerkmal wird der Benutzer vorzugsweise identifiziert und/oder authentifiziert. D. h. bei dem Vergleich der erfassten Informationen mit den zuvor abgespeicherten Informationen kann festgestellt werden, welcher Benutzer Zugang zu dem geschützten Bereich wünscht. Hierfür können beispielsweise sämtliche erfassten Informationen oder auch nur ein Teil davon verwendet werden. Andererseits kann mit Hilfe des Vergleichs auch festgestellt werden, ob es sich bei dem Benutzer, der Zugang verlangt, auch tatsächlich um jenen Benutzer handelt, der er vorgibt, zu sein. Auch hierfür können sämtliche oder nur ein Teil der erfassten Informationen verwendet werden.

Am meisten Sicherheit bringt die Kombination beider Möglichkeiten, wobei der Benutzer zunächst identifiziert und danach authentifiziert wird. Bei der Identifizierung wird festgestellt, um welchen Benutzer es sich handelt, d. h. aus einer beliebig langen Liste von berechtigten Benutzern wird genau ein auf diesen Benutzer passender Eintrag herausgefiltert. Danach folgt die Authentifizierung dieses Benutzers, indem geprüft wird, ob der physische Benutzer, der Zutritt verlangt, auch mit dem anhand der Daten identifizierten Benutzer übereinstimmt. D. h. es wird überprüft, ob die erfassten Körpermerkmale mit den dem identifizierten Benutzer zugeordneten und abgespeicherten Körpermerkmalen übereinstimmen.

Falls nur die Identifizierung oder die Authentifizierung des Benutzers anhand der erfassten Daten erfolgt, kann die Authentifizierung resp. die Identifizierung natürlich auch auf andere Art und Weise erfolgen. Der Benutzer kann sich beispielsweise mit einer Benutzerkennung und/oder einem Passwort beim System anmelden. Es ist auch möglich, dass der Benutzer einen Code eingibt, der einem Verweis auf seine Identität in den abgespeicherten Informationen entspricht. Allerdings ist es einem Unbefugten allein durch Beobachten möglich, in den Besitz derartiger Informationen zu gelangen. Zudem werden Passwörter häufig so gewählt, dass man sie sich einfach merken kann. Einfache Passwörter sind jedoch auch relativ einfach zu erraten oder sonstwie zu knacken.

Eine weitere Möglichkeit zur Identifizierung bzw. Authentifizierung besteht darin, ein benutzerspezifisches Sicherheitsmedium zu verwenden, auf welchem beispielsweise beliebige Informationen betreffend die Identität des Benutzers und/oder Informationen zur Überprüfung seiner Identität gespeichert werden können. Solche Informationen erlauben es dem System, den Benutzer zu identifizieren resp. zu authentifizieren.

Wenn daher im Folgenden lediglich von einer Authentifizierung gesprochen wird, so ist für den Fachmann klar, dass es sich entsprechend auch um eine Identifizierung oder um eine Kombination von beidem handeln kann.

Die eben erwähnten Sicherheitsmedien erleichtern dem Benutzer den Umgang mit solchen sicherheitsrelevanten Informationen. Er muss sich nämlich keine Passwörter oder dergleichen mehr merken, sondern muss jeweils nur das Sicherheitsmedium bei sich haben, um sich gegenüber einem entsprechenden System identifizieren resp. authentifizieren zu können. Ein solches Sicherheitsmedium enthält beispielsweise einen Chip, auf welchem die relevanten Informationen gespeichert sind und welche vom System auf einfache Art ausgelesen werden können. Eine weit verbreitete und daher bevorzugte Form solcher Sicherheitsmedien sind Chipkarten mit einem Mikrochip und integriertem Speicher. Solche Chipkarten entsprechen in ihrer Grösse und Form einer Kreditkarte und sind entsprechend besonders klein und leicht, weshalb sie jeder Benutzer ständig bei sich tragen kann.

Wie bereits erwähnt, handelt es sich bei den inneren Merkmalen beispielsweise um Informationen über die Lage, Grösse und Form von Knochen oder Organen. Es ist jedoch relativ aufwändig, entsprechend grosse Körperregionen zu scannen, um an diese Informationen heranzukommen.

Wie bei einem Fingerabdruck, der für jeden Menschen individuell ist, ist die räumliche Struktur der Blutgefässe von Mensch zu Mensch unterschiedlich. Dies gilt natürlich auch für die Struktur der Blutgefässe beispielsweise in einem Finger. Damit lassen sich also in einem kleinen Körperbereich individuelle Informationen über den Benutzer erfassen, weshalb zur Authentifizierung eines Benutzers vorzugsweise die räumliche Blutgefässstruktur erfasst wird.

Ähnliches gilt auch für die Struktur anderer Gefässsysteme wie beispielsweise das System der Lymphgefässe. Auch diese eignen sich daher zur erfindungsgemässen Erfassung zwecks Authentifizierung eines Benutzers.

Die Erfassung der räumlichen Struktur eines Gefässsystems reicht aus, um eine hohe Sicherheit bei der Authentifizierung eines Benutzers zu erreichen. Für den Fall, dass es dennoch jemandem gelingen sollte, unerlaubterweise an Informationen über die Gefässstruktur eines autorisierten Benutzers zu gelangen und beispielsweise ein entsprechendes Modell eines Fingers herzustellen, kann die Sicherheit weiter erhöht werden, indem zusätzliche oder andere Merkmale erfasst und geprüft werden. Es könnte beispielsweise die Temperatur oder die Feuchtigkeit des Fingers gemessen werden. Solche Messungen ermöglichen es, festzustellen, ob es sich tatsächlich um einen Finger oder aber um ein Modell eines Fingers handelt. Da jedoch sowohl die Temperatur, als auch die Feuchtigkeit an der Oberfläche eines Fingers relativ einfach vorzutäuschen sind, werden auch hier mit Vorteil Merkmale erfasst, die von aussen mit blossem Auge nicht zugänglich sind. Hierzu gehören z. B. die Fliessrichtung und/oder die Fliessgeschwindigkeit einer in der Gefässstruktur fliessenden Gefässflüssigkeit. Beim Blutgefässsystem ist dies natürlich das Blut, beim Lymphgefässsystem die Lymphe.

Der Vergleich der erfassten Merkmale mit den zu diesem Benutzer abgespeicherten Informationen kann im Grunde auf einem einzigen Merkmal basieren. Es würde ausreichen, nur die räumliche Strukturen oder beispielsweise eine über alle Gefässe gemittelte, durchschnittliche Fliessgeschwindigkeit zu vergleichen. Da jedoch die Wahrscheinlichkeit für eine korrekte Authentifizierung des Benutzers um so grösser ist, je mehr Informationen für den Vergleich verwendet werden, können die erfassten und die abgespeicherten Körpermerkmale des Benutzers sowohl hinsichtlich von Eigenschaften der Gefässstruktur als auch hinsichtlich von Eigenschaften im Zusammenhang mit der Fliessrichtung und/oder der Fliessgeschwindigkeit der Gefässflüssigkeit verglichen werden.

Obwohl zur Speicherung der zu jedem Benutzer vorgängig ermittelten Informationen prinzipiell jede Speicherform möglich ist, beispielsweise die Abspeicherung in einer Form einer Textdatei oder in Form einer binären Datei, werden diese Informationen vorzugsweise in einer Datenbank abgespeichert. Bei Datenbanken kann typischerweise schnell und einfach auf die darin abgespeicherten Daten zugegriffen werden.

Wo diese Datenbank abgespeichert ist, ist grundsätzlich unerheblich. Bei einer vorteilhaften Ausführungsvariante der Erfindung wird die Datenbank in einer Prüfeinrichtung gespeichert, welche den Vergleich zwischen den erfassten und den in der Datenbank abgespeicherten Informationen durchführt. Damit entfällt die Übertragung der Daten von der Datenbank zur Prüfeinrichtung.

Die Datenbank kann aber auch in jenem Gerät gespeichert sein, welches die Körpermerkmale erfasst, sie kann, u. U. örtlich weiter entfernt, auf einem beliebigen Datenverarbeitungssystem gespeichert sein, welches mit dem Gerät zur Erfassung der Informationen verbunden ist oder sie kann an einem beliebigen, anderen Ort gespeichert sein. Es ist auch möglich, die Datenbank aufzuteilen und den Inhalt der Datenbank an verschiedenen Orten abzuspeichern. Es ist insbesondere möglich, die ganze oder einen Teil der Datenbank auf dem zuvor erwähnten Sicherheitsmedium eines Benutzers abzuspeichern. Die Datenbank könnte beispielsweise so aufgeteilt werden, dass auf dem Sicherheitsmedium jedes Benutzers zumindest oder nur genau jene Daten abgespeichert sind, welche zur Authentifizierung dieses Benutzers notwendig sind.

Mit den verschiedenen Möglichkeiten zur Abspeicherung bzw. Aufteilung der Datenbank ergeben sich viele Möglichkeiten zur Ausführung der Erfindung.

Ist die Datenbank beispielsweise in der Prüfeinrichtung gespeichert, müssen in der Datenbank sämtliche Benutzer samt Authentifizierungsinformationen gespeichert sein, damit das System nach dem Erfassen der Körpermerkmale den Benutzer durch Vergleich der erfassten mit den in der Datenbank abgespeicherten Informationen identifzieren bzw. authentifizieren kann. Diese Variante eignet sich beispielsweise für Systeme mit hohen Sicherheitsanforderungen wie etwa den Zugriff auf das Computersystem einer Bank zwecks Online-Banking, da jeweils nur die dem System im Voraus bekannten und korrekt authentifizierten Benutzer Zugang erhalten.

Ist die Datenbank hingegen beispielsweise auf die Sicherheitsmedien der Benutzer verteilt, muss das System im Prinzip keinerlei Kenntnis über die berechtigten Benutzer haben. Einerseits erfasst das System die Körpermerkmale des Benutzers und andererseits werden die auf dem Sicherheitsmedium des Benutzers gespeicherten Informationen an die Prüfeinrichtung übermittelt. Die Prüfeinrichtung vergleicht dann die erfassten mit gespeicherten Informationen und kann auf diese Weise feststellen, um welchen Benutzer es sich handelt. Diese Variante eignet sich beispielsweise für Systeme mit niedrigeren Anforderungen an die Sicherheit wie z. B. bei einer Zutrittsbeschränkung in ein Gebäude, da grundsätzlich auch Benutzer Zutritt erhalten, die dem System nicht im Voraus bekannt sind, welche aber aufgrund der erfassten und der auf dem Sicherheitsmedium abgespeicherten Information korrekt authentifiziert wurden.

Wenn das Sicherheitsmedium selber gewisse Eigenschaften aufweist, die beim Lesen des Mediums vom System überprüft werden können, kann die Variante der Erfindung, bei welcher die Datenbank auf die Sicherheitsmedien der Benutzer verteilt ist, auch bei erhöhten Sicherheitsanforderungen eingesetzt werden. So könnte beispielsweise eine Chipkarte, die wie ein Pass für den Zugang in ein fremdes Land verwendet werden soll, Informationen enthalten, die das Herkunftsland und/oder die Echtheit der Karte betreffen. Das System, das z. B. an einer Landesgrenze installiert ist, prüft dann die Echtheit der Karte und/oder das Herkunftsland und erst, wenn diese Informationen korrekt sind, überprüft das System auch die Identität bzw. Authentizität des Benutzers, der die Karte als Pass vorweist.

Zwischen den beiden Extremen: die gesamte Datenbank ist an einem Ort gespeichert und die gesamte Datenbank ist auf die Sicherheitsmedien der Benutzer verteilt, gibt es eine Vielzahl möglicher Varianten der Erfindung, bei welchen Teile der Datenbank an verschiedenen Orten gespeichert sind. Potenziert wird die Anzahl der Möglichkeiten noch dadurch, dass sowohl für eine allfällige Identifizierung als auch für eine allfällige Authentifizierung des Benutzers Daten verwendet werden können, die irgendwo in der Datenbank gespeichert sind, also entweder in einem Speicher der Prüfeinrichtung oder auch in einem Speicher auf den Sicherheitsmedien.

Diese abgespeicherten Informationen zur Identifizierung und/oder Authentifizierung des Benutzers können hierbei auch Informationen umfassen, die zwar benutzerspezifisch, aber nicht unbedingt Körpermerkmale des Benutzers sind. D. h. das System könnte beispielsweise so konfiguriert sein, dass der Benutzer anhand der auf der Karte gespeicherten Informationen bzw. direkt durch die Karte selber identifiziert und mittels Erfassung der Körpermerkmale und deren Vergleich mit den in der Datenbank in der Prüfeinrichtung gespeicherten Informationen authentifiziert wird.

Für die Erfassung der gewünschten Merkmale gibt es eine Vielzahl von Verfahren. Bildgebende Verfahren eignen sich besonders gut, da solche Verfahren auf die Darstellung bzw. Verarbeitung von zwei- oder dreidimensionalen Bildern optimiert sind, wobei eine optische Darstellung der erfassten Bilder bei der Erfindung allerdings nicht notwendig ist. Zu solchen bildgebenden Verfahren gehören beispielsweise herkömmliche Ultraschall- oder andere sonographische Verfahren, Röntgenverfahren, Computertomographie, Magnetresonanztomographie oder auch die Szintigraphie. Die meisten dieser Verfahren wie die Computertomographie, die Magnetresonanztomographie oder die Szintigraphie sind enorm aufwändig. Zudem bringen einige dieser Verfahren, namentlich jene, die auf der Röntgentechnolgie basieren, eine unerwünschte Strahlenbelastung für den Benutzer mit sich.

Zur Erfassung der gewünschten Merkmale wird daher vorzugsweise ein sonographisches Verfahren verwendet, welches zum Einen den Benutzer keinerlei Strahlenbelastung aussetzt und zum Andern relativ einfach d. h. kompakt und kostengünstig realisierbar ist. Obwohl prinzipiell auch einfache sonographische Geräte wie z. B. herkömmliche Ultraschallgeräte verwendet werden könnten, werden mit Vorteil moderne Duplex-Sonographie-Verfahren eingesetzt. Diese erlauben es, die gewünschten Merkmale nicht nur mit einem auf dem Schall-Echo basierenden Verfahren zu erfassen, sondern zusätzlich auch mit der Doppler-Spektralanalyse.

Ein besonders bevorzugtes Verfahren ist die dreidimensionale Farbduplex-Sonographie. Dieses Verfahren hat den Vorteil, dass sich Gefässe aller Körperregionen darstellen lassen, wobei durch den Einsatz von Farbdopplern hochwertige und gut interpretierbare Bilder erzeugt werden können. Zudem kann die Erfassung der Merkmale beliebig oft wiederholt werden, wobei sie aufgrund der Verwendung von Ultraschall für den Benutzer nicht belastend ist.

Diese Technik ist damit besonders gut geeignet, einerseits mit üblicher Echographie die dreidimensionale Struktur der Arterien bzw. Venen in einem Finger des Benutzers und andererseits mit Hilfe der Dopplertechnik die Fliessrichtung des Blutes in den Blutgefässen darzustellen bzw. zu erfassen. Stimmt die Gefässstruktur und/oder die Fliessrichtung in diesen Gefässen mit den Angaben überein, die zuvor ermittelt und in der Datenbank für diesen Benutzer gespeichert wurden, ist der Benutzer korrekt authentifiziert.

Beim Vergleichen der erfassten mit den abgespeicherten Merkmalen muss berücksichtigt werden, dass der Benutzer den Finger nicht immer mit demselben Druck und demselben Winkel auf den Sensor legt. D. h. der Vergleich wird sozusagen dreidimensional durchgeführt, wobei Drehungen des erfassten Gefässsystems sowie teilweise oder totale Stauchungen berücksichtigt werden. Hierbei wird beispielsweise auch die Änderung der Fliessrichtungen des Blutes in den Gefässen relativ zum Sensor berücksichtigt, welche sich aus einer Drehung bzw. Stauchung des Fingers ergibt.

Bei der sonographischen Erfassung einer bestimmten Körperregion wird der Schallkopf typischerweise mit der entsprechenden Hautfläche in Kontakt gebracht. Um unerwünschte Reflexionen der Schallwellen beim Übergang vom Schallkopf durch die Luft in das Gewebe zu vermeiden, wird vorher zumeist eine gelartige Substanz auf die Haut oder den Schallkopf aufgetragen. Dies kann auch bei der Erfindung erfolgen, wobei auch andere geeignete Materialen, beispielsweise Materialen mit einer eher festeren Konsistenz verwendet werden können.

Der Körper eines jeden Menschen verändert sich laufend. Entsprechend verändern sich auch die zur Authentifizierung verwendeten Körpermerkmale eines Benutzers. Es besteht also die Gefahr, dass der Benutzer nach einer Weile plötzlich nicht mehr korrekt authentifiziert werden kann, weil sich z. B. das Blutgefässsystem schon so stark verändert hat, dass es von der Prüfeinrichtung nicht mehr korrekt erkannt werden kann.

Es wäre zwar möglich, die dem Benutzer zugeordneten und in der Datenbank abgespeicherten Informationen regelmässig neu zu erfassen und den abgespeicherten Datensatz jeweils mit dem aktuellsten Datensatz zu überschreiben. Mit Vorteil werden die abgespeicherten Informationen jedoch mit Hilfe der beim Authentifizieren des Benutzers erfassten Informationen aktualisiert. Das System lernt quasi selber und hält die abgespeicherten Daten so auf dem aktuellsten Stand. Um hierbei eine ungewollte Veränderung der abgespeicherten Informationen zu vermeiden, welche z. B. durch einen Fremdkörper zwischen dem Sensor und dem zu scannenden Körperteil oder durch einen anderen Fehler hervorgerufen wird, wird der abgespeicherte Datensatz erst dann mit dieser bestimmten Veränderung aktualisiert, wenn die Veränderung bei zumindest einer weiteren Erfassung der Körpermerkmale bestätigt worden ist.

Die Vorrichtung zur Durchführung des erfindungsgemässen Verfahrens zur Erteilung einer Zugangsberechtigung für einen Zugang zu geschützten Bereichen durch einen Benutzer umfasst:
- erste Mittel zur Erfassung der gewünschten Informationen, d. h. der inneren Körpermerkmale des Benutzers,
- zweite Mittel zur Durchführung eines Vergleichs der erfassten Merkmale mit den bereits zuvor ermittelten, dem Benutzer zugeordneten und abgespeicherten Merkmalen, sowie
- dritte Mittel zur Erteilung oder Verweigerung der Zugangsberechtigung zu den geschützten Bereichen in Abhängigkeit des Resultats des Vergleichs der erfassten und der zuvor gespeicherten Merkmale.

Die ersten Mittel umfassen beispielsweise ein Röntgengerät oder einen Sonographielesekopf, welche mit der jeweiligen Technologie beispielsweise ein bestimmtes Körperteil oder eine bestimmte Körperregion des Benutzers quasi ausmessen und die entsprechenden Informationen über die gewünschten inneren Merkmale erfassen und typischerweise in elektronisch verarbeitbare Daten umwandeln.

Diese Informationen werden an die zweiten Mittel weitergeleitet. Diese lesen die zuvor ermittelten, dem Benutzer zugeordneten und gespeicherten Merkmale aus dem Speicher aus und vergleichen diese mit den durch die ersten Mittel erfassten Informationen. Das Resultat des Vergleichs wird an die dritten Mittel übergeben, welche dem Benutzer die Zutrittsberechtigung erteilen, wenn die erfassten Merkmale mit den zu diesem Benutzer abgespeicherten Merkmalen übereinstimmen, bzw. dem Benutzer die Zutrittsberechtigung verweigern, wenn dies nicht der Fall ist.

Die ersten, zweiten und dritten Mittel können grundsätzlich unabhängig voneinander als eigenständige Geräte realisiert sein, wobei die Funktion eines bestimmten Mittels auch auf mehrere Geräte verteilt werden kann.

Um der Forderung nach kleinen, leichten und kompakten Geräten nachzukommen, sind bei einer bevorzugten Ausbildungsform der erfindungsgemässen Vorrichtung jedoch die ersten und dritten Mittel in ein Lesegerät integriert. Die zweiten Mittel sowie die Datenbank sind vorzugsweise in eine Prüfeinrichtung integriert. Wie weiter oben bereits erwähnt, kann die Datenbank jedoch auch an einem beliebigen anderen Ort abgespeichert oder gar auf mehrere Speicher aufgeteilt sein.

Zur Übermittlung der erfassten Merkmale vom Lesegerät zur Prüfeinrichtung sowie zur Übermittlung des Vergleichsresultats von der Prüfeinrichtung zum Lesegerät umfasst die erfindungsgemässe Vorrichtung weiter entsprechende Kommunikationsmittel.

Wenn nun ein Benutzer Zutritt zu den geschützten Bereichen wünscht, führt er beispielsweise einfach sein Sicherheitsmedium, beispielsweise eine Chipkarte, in das Lesegerät ein. Dieses liest dann die auf dem Sicherheitsmedium gespeicherten Daten über den Benutzer, beispielsweise Daten über die Identität des Benutzers, aus und übermittelt diese Daten an die Prüfeinrichtung. Die Prüfeinrichtung überprüft, ob diese Chipkarte einem autorisierten Benutzer gehört und informiert das Lesegerät entsprechend. Ist der so identifizierte Benutzer auch autorisiert, erfasst das Lesegerät daraufhin die festgelegten Merkmale des Benutzers, beispielsweise die Gefässstruktur eines Fingers sowie die Fliessrichtung der darin fliessenden Gefässflüssigkeit, und übermittelt diese Daten wiederum an die Prüfeinrichtung. Diese wertet die erfassten Daten aus und vergleicht sie mit den zu diesem Benutzer in der Datenbank abgespeicherten Informationen. Das Resultat dieses Vergleichs übergibt die Prüfeinrichtung dem Lesegerät, welches je nach Resultat die Zugangsberechtigung bestätigt oder verneint. Wurde der Benutzer korrekt authentifiziert, wird ihm der Zugang gewährt. Beispielsweise wird die Tür in das Gebäude entriegelt, die geschützten Speicherbereiche werden für den Zugriff freigeschaltet oder der Benutzer darf in ein geografisches Gebiet wie etwa ein bestimmtes Land einreisen. Konnte der Benutzer hingegen nicht korrekt authentifiziert werden, wird ihm der Zugang verweigert.

Die Kommunikation zwischen dem Lesegerät und der Prüfeinrichtung kann natürlich unverschlüsselt erfolgen. Je nach den Umständen ist allerdings eine Verschlüsselung sinnvoll. Wenn die Daten beispielsweise über offene Kommunikationsnetze wie z. B. das Internet übermittelt werden sollen, ist eine verschlüsselte Kommunikation von Vorteil. Je nach gewünschter oder benötigter Sicherheit, können entsprechende, bekannte Verschlüsselungsmethoden eingesetzt werden.

Je nach Anwendung kann es auch von Vorteil sein, wenn die zweiten Mittel nicht in eine eigenständige Prüfeinrichtung, sondern ebenfalls in das Lesegerät integriert ist. In diesem Fall könnten die Kommunikationsmittel vereinfacht werden, weil eine Verschlüsselung bei der Übermittlung der Daten typischerweise nicht notwendig ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Systems mit einer erfindungsgemässen Vorrichtung zur Erteilung einer Zutrittsberechtigung,
- Fig. 2: eine detailliertere Darstellung des Lesegerätes aus Figur 1,
- Fig. 3: eine schematische Darstellung des erfindungsgemässen Verfahrens zur Erteilung einer Zutrittsberechtigung sowie
- Fig. 4: eine schematische Darstellung eines Gebäudes mit einer erfindungsgemässen Vorrichtung zur Erteilung einer Zutrittsberechtigung.

Grundsätzlich sind in den Figuren gleiche Teile mit gleichen Bezugszeichen versehen.

### Wege zur Ausführung der Erfindung

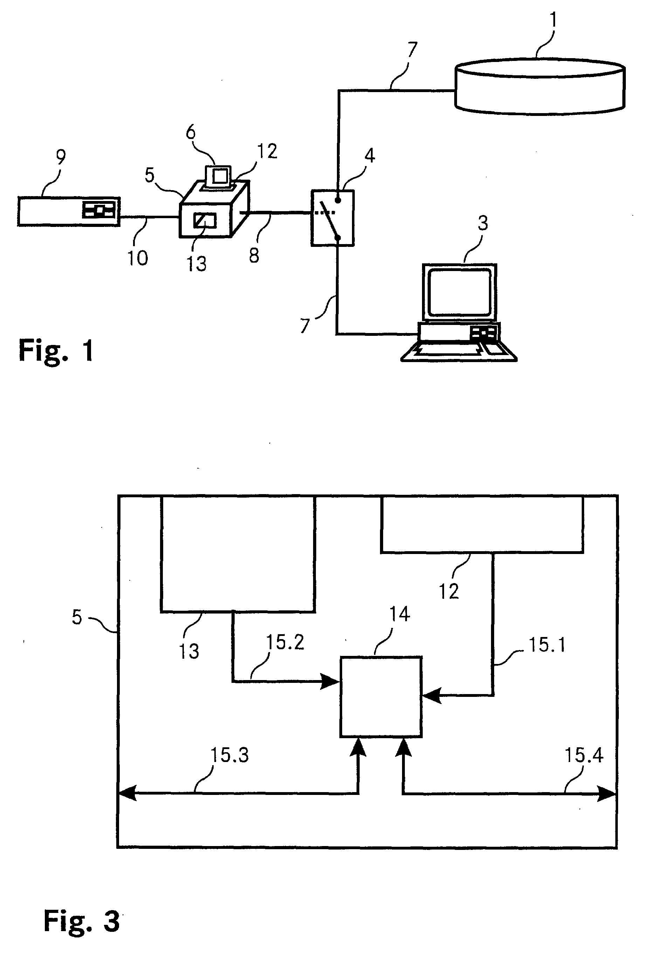

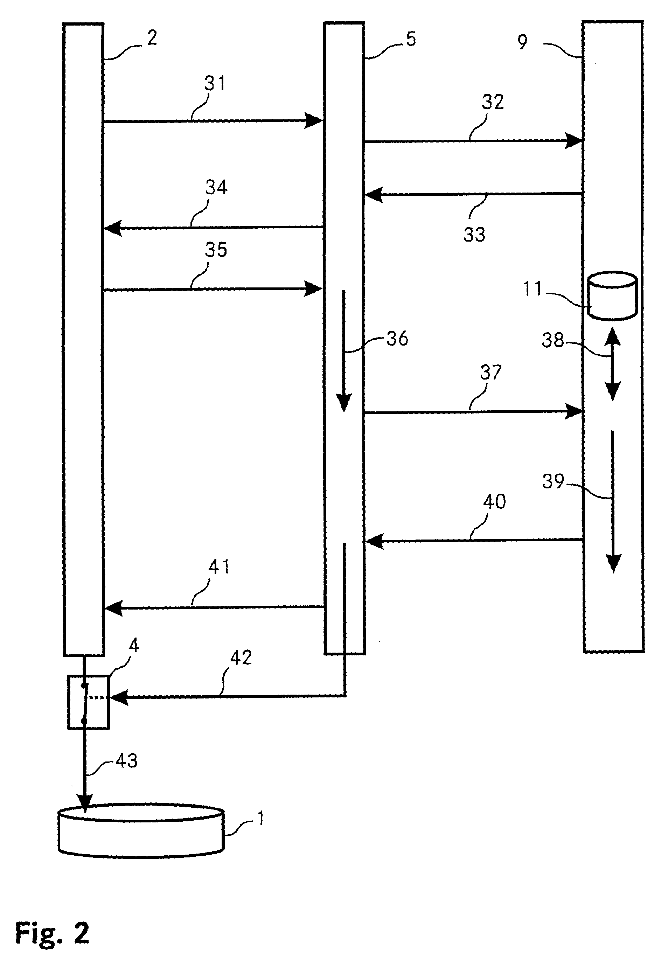

In Figur 1 ist ein System mit einer erfindungsgemässen Vorrichtung zur Erteilung einer Zutrittsberechtigung für den Zugriff auf den geschützten Speicher 1 eines Computersystems durch einen Benutzer 2 dargestellt. Figur 2 zeigt das Verfahren, das beim Zugriff durch den Benutzer 2 abläuft.

Das System stellt sicher, dass nur autorisierte Benutzer auf den Speicher 1 zugreifen und Daten aus dem Speicher 1 auslesen können. Der Zugriff auf den Speicher 1 erfolgt über ein Terminal 3, wobei die Verbindung 7 zwischen dem Terminal 3 und dem Speicher 1 zuerst freigeschaltet werden muss. Dieses Freischalten ist durch einen Schalter 4 angedeutet, der durch ein Lesegerät 5 über eine Steuerleitung 8 gesteuert, d. h. geöffnet oder geschlossen wird. Die Freischaltung kann natürlich nicht nur hardwaremässig, sondern auch auf Softwareebene erfolgen. Hierbei spielt es auch keine Rolle, ob die Freischaltung innerhalb des Terminals 3, innerhalb des Computersystems mit dem Speicher 1 oder sonstwo geschieht.

Der Benutzer 2, der Zugriff auf den Speicher 1 möchte, führt in einem ersten Schritt 31 zunächst seine Chipkarte 6 in einen entsprechenden Schlitz 12 im Lesegerät 5 ein. Das Lesegerät 5 liest die auf der Chipkarte 6 gespeicherten Daten aus und fragt die Prüfeinrichtung 9 in einem Schritt 32 via eine Kommunikationsverbindung 10 an, ob der Benutzer 2, d. h. der Besitzer der Chipkarte 6 autorisiert ist, auf den Speicher 1 zuzugreifen. Die Prüfeinrichtung 9 schaut in der Benutzerdatenbank 11 nach, ob die Chipkarte 6 bzw. deren Besitzer als autorisierter Benutzer registriert ist. Im Schritt 33 teilt die Prüfeinrichtung dem Lesegerät mit, ob es diesen Benutzer gefunden hat oder nicht.

Zusätzlich zu den Informationen über die Identität der autorisierten Benutzer ist in der Benutzerdatenbank 11 für jeden Benutzer auch ein entsprechender Referenz-Datensatz hinterlegt, welcher die zu vergleichenden Informationen über die jeweils zu prüfenden Merkmale enthält. Dieser Referenz-Datensatz umfasst beispielsweise Informationen über die Struktur der Blutgefässe sowie der Richtung des Blutflusses im Daumen jedes Benutzers.

Ist der Benutzer nicht oder als nicht autorisiert registriert, bleibt der Schalter 4 geöffnet und der Vorgang wird abgebrochen.

Wurde der Benutzer 2 hingegen in der Benutzerdatenbank 11 gefunden und ist er autorisiert, auf den Speicher 1 zuzugreifen, fordert das Lesegerät 5 den Benutzer 2 in einem Schritt 34 auf, einen bestimmten Finger, beispielsweise den Daumen in eine entsprechende Messöffnung 13 einzulegen. Im Schritt 35 legt der Benutzer 2 seinen Daumen in die Messöffnung 13 und das Lesegerät 5 erfasst im Schritt 36 die gewünschten Daten. Im vorliegenden Beispiel sind dies wie bereits erwähnt Informationen über das Blutgefässsystem des Daumens des Benutzers 2 sowie Informationen über die Richtung des Blutflusses in den einzelnen Gefässen.

Diese Informationen werden mit einem 3D-Farbduplex-Sonographie Verfahren erfasst, welches nicht nur Daten über die räumliche Anordnung der Blutgefässe mit Hilfe der Ultraschallechos, sondern mit Hilfe des Dopplereffektes auch Daten über die Richtung und die Geschwindigkeit des in den Gefässen fliessenden Blutes liefert.

Die erfassten Daten werden danach im Schritt 37 via die Kommunikationsverbindung 10 an die Prüfeinrichtung 9 übergeben, welche im Schritt 38 die dem Inhaber der Chipkarte 6 zugeordneten und in der Benutzerdatenbank 11 gespeicherten Informationen ausliest und diese im Schritt 39 mit den vom Lesegerät 5 erhaltenen Daten vergleicht. Da der Daumen in der Praxis typischerweise nicht in präzise derselben Position relativ zur Messvorrichtung liegt wie beim Erstellen des Referenz-Datensatzes und in der Regel auch nicht mit exakt demselben Druck auf die entsprechenden Sensoren gelegt wird, werden beim Vergleich sowohl eine allfällige räumliche Drehung und Verschiebung des Daumens sowie unterschiedliche Auflege-Drücke berücksichtigt.

Im Schritt 40 teilt die Prüfeinrichtung 9 dem Lesegerät 5 via die Kommunikationsverbindung 10 das Resultat dieses Vergleichs mit. Ist das Resultat negativ, d. h. wurde der Benutzer 2 nicht korrekt authentifiziert, wird dies dem Benutzer 2 angezeigt und der Schalter 4 bleibt geöffnet. Der Benutzer 2 erhält keinen Zugang zum Speicher 1. Ist das Resultat hingegen positiv, d. h. wurde der Benutzer 2 korrekt authentifiziert, wird dies einerseits dem Benutzer 2 im Schritt 41 mitgeteilt und andererseits wird der Schalter 4 im Schritt 42 geschlossen. Damit erhält der Benutzer 2 Zugriff 43 auf den Speicher 1 und kann die gewünschten Daten auslesen oder andere Daten hineinschreiben.

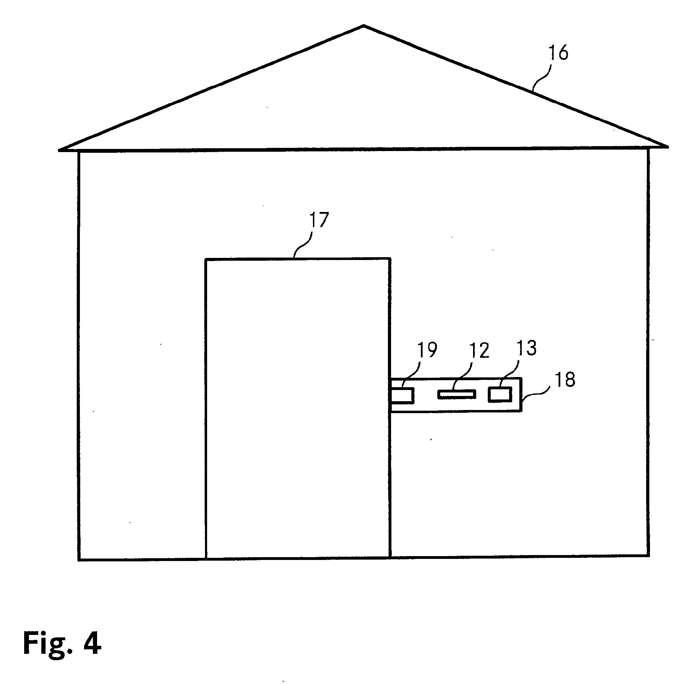

In Figur 3 ist das Lesegerät 5 etwas detaillierter dargestellt. Es umfasst eine zentrale Recheneinheit, beispielsweise einen Mikrochip 14, der über entsprechende Kommunikationsverbindungen 15.1, 15.2 mit dem Schlitz 12 zum Lesen der Karte sowie der Messöffnung 13 zur Erfassung der gewünschten Daten verbunden ist. Weiter ist der Mikrochip 14 über eine Kommunikationsverbindung 15.3 mit der Prüfeinrichtung verbindbar. Ausserdem ist eine Kommunikationsverbindung 15.4 vorgesehen, welche dazu dient, die Massnahmen zu veranlassen, um dem Benutzer den Zugang zum Speicher 1 zu ermöglichen bzw. zu verunmöglichen. Im vorliegenden Beispiel wird über die Kommunikationsverbindung 15.4 der Schalter 4 gesteuert, und zwar so, dass er geschlossen wird, wenn der Benutzer auf den Speicher 1 zugreifen darf bzw. so, dass er geöffnet wird oder bleibt, wenn der Benutzer nicht autorisiert ist, auf den Speicher 1 zuzugreifen.

Die Steuerung kann auch derart erfolgen, dass das Lesegerät 5 z. B. das Computersystem anweist, dem Benutzer 2 den Zugang zu gewähren, anstatt dem Benutzer 2 den Zugang selber via Schalter 4 freizuschalten. Weiter kann das Lesegerät 5 auch derart ausgebildet sein, dass die Kommunikationsverbindungen über ein gemeinsames Bus-System laufen.

Figur 4 zeigt eine schematische Darstellung eines Gebäudes 16 mit einer Tür 17, welche mit einer erfindungsgemässen Vorrichtung zur Authentifizierung eines Benutzers gesichert ist. D. h. ein Benutzer kann nur in das Gebäude 16 hinein, wenn er sich korrekt authentifiziert und vorgängig allenfalls identifiziert hat.

Das Gebäude 16 umfasst eine Lese/Prüfeinrichtung 18 mit einem Schlitz 12 zum Einführen der Chipkarte sowie einer Messöffnung 13 zum Einlegen des Daumens zwecks Erfassung der Blutgefässstruktur sowie der Blutfliessrichtung. Die Lese/Prüfeinrichtung 18 ist beispielsweise gegen Diebstahl, Beschädigung und unerlaubter Manipulation geschützt, wobei allerdings der Schlitz 12 und die Messöffnung 13 von aussen zugänglich sind.

Das Verfahren läuft im Grunde genommen genau gleich ab wie in Figur 3 dargestellt, ausser dass die Prüfeinrichtung, die Benutzerdatenbank und das Lesegerät in einer Lese/Prüfeinrichtung 18 zusammengefasst sind. Damit kann die Kommunikation zwischen diesen Einheiten intern erfolgen und es entfallen gewisse Kommunikationsverbindungen.

Weiter umfasst die Lese/Prüfeinrichtung 18 einen Sicherungsmechanismus 19 zum Öffnen bzw. Verriegeln der Tür 17. Standardmässig ist die Tür 17 verriegelt. Wird der Benutzer, der seine Chipkarte in den Schlitz 12 steckt und seinen Daumen in die Messöffnung 13 legt, korrekt identifiziert und authentifiziert, entriegelt der Sicherungsmechanismus 19 die Tür 17 und gibt dem Benutzer so den Zugang zum Gebäude 16 frei. Wird der Benutzer nicht korrekt authentifiziert, bleibt die Tür 17 verriegelt.

Selbstverständlich kann das erfindungsgemässe Verfahren zur Benutzer-Authentifizierung auch mit weiteren Verfahren kombiniert werden, indem beispielsweise davor, während und/oder danach weitere Sicherheitsüberprüfungen durchgeführt werden. Soll etwa verschlüsselt kommuniziert werden, beispielsweise mit einem Public-Key Verfahren, könnte auf der Chipkarte des Benutzers der private Schlüssel seines Schlüsselpaares abgespeichert sein. Zur Verschlüsselung der Kommunikation des Lesegerätes mit der Prüfeinrichtung könnte dann dieser Schlüssel verwendet werden.

Das Verfahren kann beispielsweise auch dahingehend abgewandelt werden, dass der Benutzer nicht vorgängig in einem separaten Schritt identifiziert wird. Es könnte beispielsweise direkt die Blutgefässstruktur bestimmt und dann in der Benutzerdatenbank nachgeschaut werden, ob die erfassten Informationen mit einem der in der Datenbank gespeicherten Referenz-Datensätze überein stimmt, bzw. einem der Datensätze genügend ähnlich ist. Diese Methode hat allerdings den Nachteil, dass der erfasste Datensatz mit jedem Referenz-Datensatz in der Benutzerdatenbank verglichen werden muss. Wird der Benutzer vorgängig identifiziert, reicht es aus, den erfassten Datensatz nur mit dem zu diesem Benutzer abgespeicherten Referenz-Datensatz zu vergleichen.

Es wäre auch möglich, die Benutzerdatenbank 11 nicht in die Prüfeinrichtung 9 zu integrieren, sondern wie bereits erläutert, den Referenz-Datensatz eines Benutzers direkt auf der Chipkarte 6 des Benutzers abzuspeichern. Bei dem Beispiel gemäss Figur 4 würde in diesem Fall die Lese/Prüfeinrichtung 18 den Referenz-Datensatz im Schritt 38 nicht aus der Benutzerdatenbank 11, sondern direkt aus der Chipkarte 6 auslesen. Im Schritt 39 würde dann der Referenz-Datensatz von der Chipkarte mit dem erfassten Datensatz verglichen.

Zusammenfassend ist festzustellen, dass die Erfindung eine äusserst sichere Identifizierung bzw. Authentifizierung eines Benutzers erlaubt, der auf geschützte Bereiche zugreifen oder Zutritt zu solchen Bereichen haben möchte. Die hohe Sicherheit bei der Authentifizierung resp. Identifizierung wird erreicht, indem hierfür Informationen über das Innere eines bestimmten Körperteils oder einer bestimmten Körperregion des Benutzers verwendet werden, die von blossem Auge bzw. ohne technische Hilfsmittel nicht sichtbar sind.

## Patentansprüche

1. Verfahren zur Erteilung einer Zugangsberechtigung für einen Zugang zu geschützten Bereichen (1) durch einen Benutzer (2), bei welchem Körpermerkmale des Benutzers erfasst werden, **dadurch gekennzeichnet, dass** innere Körpermerkmale des Benutzers erfasst werden (36), ein Vergleich (39) der erfassten Körpermerkmale mit zuvor ermittelten, dem Benutzer (2) zugeordneten und abgespeicherten Körpermerkmalen durchgeführt und dem Benutzer (2) in Abhängigkeit eines Resultats dieses Vergleichs die Zugangsberechtigung (43) zu den geschützten Bereichen (1) erteilt oder verweigert wird.

2. Verfahren nach Anspruch 1, **dadurch gekennzeichnet, dass** der Benutzer anhand des Vergleichs (39) der erfassten mit den abgespeicherten Körpermerkmalen identifiziert und/oder authentifiziert wird.

3. Verfahren nach Anspruch 1 oder 2, **dadurch gekennzeichnet, dass** als Körpermerkmale eine räumliche Gefässstruktur, insbesondere eine Blutgefässstruktur, eine Fliessrichtung einer in der Gefässstruktur fliessenden Gefässflüssigkeit und/oder eine Fliessgeschwindigkeit der Gefässflüssigkeit erfasst wird (36).

4. Verfahren nach einem der Ansprüche 1 bis 3, **dadurch gekennzeichnet, dass** die zuvor ermittelten Körpermerkmale in einer Datenbank (11) abgespeichert werden.

5. Verfahren nach einem der Ansprüche 1 bis 4, **dadurch gekennzeichnet, dass** die zuvor ermittelten und dem Benutzer (2) zugeordneten Körpermerkmale zumindest teilweise auf einem benutzerspezifischen Sicherheitsmedium (6), insbesondere einer Chipkarte, abgespeichert werden.

6. Verfahren nach einem der Ansprüche 1 bis 5, **dadurch gekennzeichnet, dass** die Körpermerkmale des Benutzers mit einem sonographischen Verfahren, insbesondere einem Duplex-Sonographie Verfahren, erfasst werden.

7. Verfahren nach einem der Ansprüche 1 bis 6, **dadurch gekennzeichnet, dass** mit einem dreidimensionalen Farbduplex-Sonographie Verfahren eine Blutgefässstruktur eines Fingers des Benutzers und/oder eine Blutfliessrichtung innerhalb der Blutgefässstruktur erfasst und mit entsprechenden, zuvor abgespeicherten und dem Benutzer zugeordneten Körpermerkmalen verglichen werden.

8. Verfahren nach einem der Ansprüche 1 bis 7, **dadurch gekennzeichnet, dass** die zuvor ermittelten, dem Benutzer (2) zugeordneten und abgespeicherten Körpermerkmale anhand der erfassten Körpermerkmale aktualisiert werden.

9. Vorrichtung zur Erteilung einer Zugangsberechtigung für einen Zugang (43) zu geschützten Bereichen (1) durch einen Benutzer (2), umfassend
a) erste Mittel zur Erfassung von Körpermerkmalen des Benutzers (2)
**dadurch gekennzeichnet, dass**
b) die ersten Mittel (5, 13) zur Erfassung von inneren Körpermerkmalen des Benutzers (2) ausgebildet sind und
c) die Vorrichtung zweite Mittel (9) zur Durchführung eines Vergleichs der erfassten Körpermerkmale mit zuvor ermittelten, dem Benutzer zugeordneten und abgespeicherten Körpermerkmalen sowie
d) dritte Mittel (5) zur Erteilung oder Verweigerung der Zugangsberechtigung zu den geschützten Bereichen (1) in Abhängigkeit eines Resultats des Vergleichs umfasst.

10. Vorrichtung nach Anspruch 9, **dadurch gekennzeichnet, dass** die zuvor ermittelten und dem Benutzer zugeordneten Körpermerkmale in einer Datenbank (11) gespeichert sind, wobei die ersten und dritten Mittel in ein Lesegerät (5) und die zweiten Mittel in eine Prüfeinrichtung (9) integriert sind und die Vorrichtung Kommunikationsmittel (10) zur Übermittlung der erfassten Merkmale vom Lesegerät (5) zur Prüfeinrichtung (9) sowie zur Übermittlung des Resultats des Vergleichs von der Prüfeinrichtung (9) zum Lesegerät (5) umfasst.

11. Vorrichtung nach Anspruch 10, **dadurch gekennzeichnet, dass** die Kommunikationsmittel (10) derart ausgebildet sind, dass sie eine verschlüsselte Kommunikation ermöglichen.

12. Vorrichtung nach Anspruch 9 oder 10, **dadurch gekennzeichnet, dass** die Prüfeinrichtung (9) mit den dritten Mitteln in das Lesegerät (5) integriert ist.
